# EUROPÄISCHE PATENTSCHRIFT

(11) **EP 1 150 151 B1**
(45) Veröffentlichungstag und Bekanntmachung des Hinweises auf die Patenterteilung: **21.06.2006**
(21) Anmeldenummer: 01108468.8
(22) Anmeldetag: 04.04.2001
(51) Int. Cl.: G02B 6/44

(54) **Aufnahmevorrichtung zum Führen und Umlenken eines Lichtwellenleiters**
Receptacle for guiding and deflecting an optical waveguide
Logement pour guider et dévier un guide d'onde optique

(30) Priorität: 28.04.2000 DE 10020995
(43) Veröffentlichungstag der Anmeldung: 31.10.2001
(73) Patentinhaber: Bayerische Motoren Werke Aktiengesellschaft, 80809 München (DE); Kromberg & Schubert, 42389 Wuppertal (DE)
(72) Erfinder: Hochmuth, Ludwig, 85640 Putzbrunn (DE); Hermann, Hans Joachim, 93333 Neustadt an der Donau (DE)

(56) Entgegenhaltungen:
- EP-A- 0 084 440
- DE-U- 8 905 509
- US-A- 5 717 811

## Beschreibung

Die Erfindung bezieht sich auf eine Aufnahmevorrichtung zum Führen und Umlenken eines Lichtwellenleiters nach dem Oberbegriff des Patentanspruchs 1.

Eine derartige Aufnahmevorrichtung ist beispielsweise aus der DE 197 14 718 A1 (Fig. 5) bekannt. Zum Führen und Umlenken eines Lichtwellenleiters ist bei dieser bekannten Aufnahmevorrichtung eine Umlenk-Kammer vorgesehen, die aus einem durch Stege gebildeten, gebogenen Führungskanal und einem darin eingepaßten Spleißschutz besteht. Der Spleißschutz wird durch zwei verschließbare Planarhalterungen gebildet, worin ein Paar von Lichtwellenleitern eingefügt sind. Insbesondere durch den gebogenen Führungskanal wird ein vorgegebener Mindestbiegeradius eingehalten.

Insbesondere bei der Anwendung von Lichtwellenleitern in Kraftfahrzeugen werden hohe Anforderungen an dessen Schutz vor mechanischen Belastungen gestellt.

DE-U-8905509 offenbart eine Einrichtung zum Aufnehmen einer Anzahl ankommender und abgehender Lichtwellenleiter, um Lichtwellenleiter über Steckverbinder paarweise miteinander zu verbinden. Bei dieser Einrichtung werden die Lichtwellenleiter in Führungskanäle bzw. Kammern eingebracht, die geringfügig größer gewählt sind als der Außendurchmesser der Lichtwellenleiter. Die Lichtwellenleiter sind in den Führungskanälen für deren paarweise Verbindung zugentlastet festgelegt.

Aus der US-A-5 724 469 ist eine Vorrichtung zum Aufwickeln von Glasfasern bekannt. Der zylindrische Wickelkörper dieser Vorrichtung besteht aus zwei Hälften, die in unterschiedlichen Abständen voneinander angeordnet werden können und hierdurch entweder einen zylindrischen oder einen ovalen Wickelkörper bilden. Beide Hälften können formschlüssig mittels Nuten und Federn verbunden werden und bilden ggf. einen zylindrischen Wickelkörper.

US-A-5946440 betrifft eine Vorrichtung zur Aufnahme ein Mehrzahl von Lichtwellenleitern, die über Kammern vereinzelt und jeder vereinzelte Lichtwellenleiter mit einem zugeordneten Ausgangs-Lichtwellenleiter optisch gekoppelt wird. Der Führungskanal für die Zuführung der Lichtwellenleiter zu den Kammern weist beabstandete Vorsprünge auf, zwischen denen die Lichtwellenleiter in den Führungskanal eingeführt werden. In entsprechender Weise sind die Vereinzelungskammern gebildet, in die die einzelnen Lichtwellenleiter eingefädelt werden.

Es ist Aufgabe der Erfindung, eine Aufnahmevorrichtung für Lichtwellenleiter für eine Anwendung im Kraftfahrzeug zu verbessern. Insbesondere soll zum Biegeschutz hinzu ein Schutz vor Querdruck und vor Längszug vorgesehen sein. Weiterhin ist dabei die besondere Problematik zu berücksichtigen, die im Hinblick auf Überlängen bei einem Lichtwellenleiter entsteht. Überlängen können beim Wickeln des Kabelsatzes entstehen und können nicht wie bei einem Kupferkabel abgeschnitten werden.

Die Aufgabe wird durch die Merkmale des Patentanspruchs 1 gelöst. Vorteilhafte Ausgestaltungen der Erfindung sind die Gegenstände der abhängigen Patentansprüche.

Durch die Erfindung wird im Zusammenhang mit der Breite der Kammer ein Biegeschutz für den Lichtwellenleiter und mit der Länge der Kammer ein Überlängenausgleich für den Lichtwellenleiter erreicht. Der Biegeschutz im Rahmen der Auslegung der Breite entsteht inbesondere durch das Material eines Lichtwellenleiters, der in der Kammer mit einer gewissen Federsteifigkeit gebogen eingesperrt ist und aus seitlichen Öffnungen der Kammer herausragt. Zum optimalen Längenausgleich entspricht die Länge der Kammer vorzugsweise mindestens der maximal möglichen Überlänge des Lichtwellenleiters.

Unter dem Begriff Lichtwellenleiter wird zusammengefaßt ein Kabel verstanden, das beispielsweise aus einzelnen Lichtwellenleiter-Fasern mit einer Ummantelung besteht. Das Kabel kann beliebig viele Lichtwellenleiter-Fasern enthalten.

Vorzugsweise ist für jeden Lichtwellenleiter eine Kammer vorgesehen. Mehrere Kammern werden aneinandergereiht, so daß eine kanalförmige Kassette entsteht. Dabei ist vorzugsweise die untere Begrenzung einer Kammer gleich der oberen Begrenzung der anschließenden Kammer.

Die Höhe der Stege bestimmt die Bauhöhe der Kammer. Die Ausgestaltung des Bodens der Kassette und/oder die Ausgestaltung der Abdeckung der Kassette bestimmen die Deckfläche der Kammer. Je größer die Bauhöhe und die Deckfläche der Kammer sind, desto stärker wird der Querdruck auf einen Lichtwellen reduziert, der z. B. durch aufliegende Bauteile oder Kupferkabelbäume ausgeübt werden kann.

Die seitlichen Führungskanäle dienen zum mechanische Schutz ebenso wie zur Beweglichkeit der darin geführten Kabel bzw. Lichtwellenleiter.

Durch die Rastnasen soll bei der Montage ein umständliches Einfädeln der Kabel bzw. der Lichtwellenleiter vermieden werden, wodurch sowohl die Montagezeit als auch die Gefahr einer Beschädigung der Lichtwellenleiter reduziert werden.

Vorzugsweise sollen mehrere Kammern in Form einer kanalförmigen Kassette in einem Kabelkanal, der auch für weitere Kabel vorgesehen ist, integriert sein, wobei gleichzeitig eine Wandung des Kabelkanals zur Abdeckung der zur leichteren Montage im Wesentlichen offenen Kammernseite dienen soll.

In der Zeichnung ist ein Ausführungsbeispiels der Erfindung dargestellt Es zeigt
- Fig. 1: die Oberseite einer erfindungsgemäßen Aufnahmevorrichtung
- Fig. 2: die Unterseite einer erfindungsgemäßen Aufnahmevorrichtung

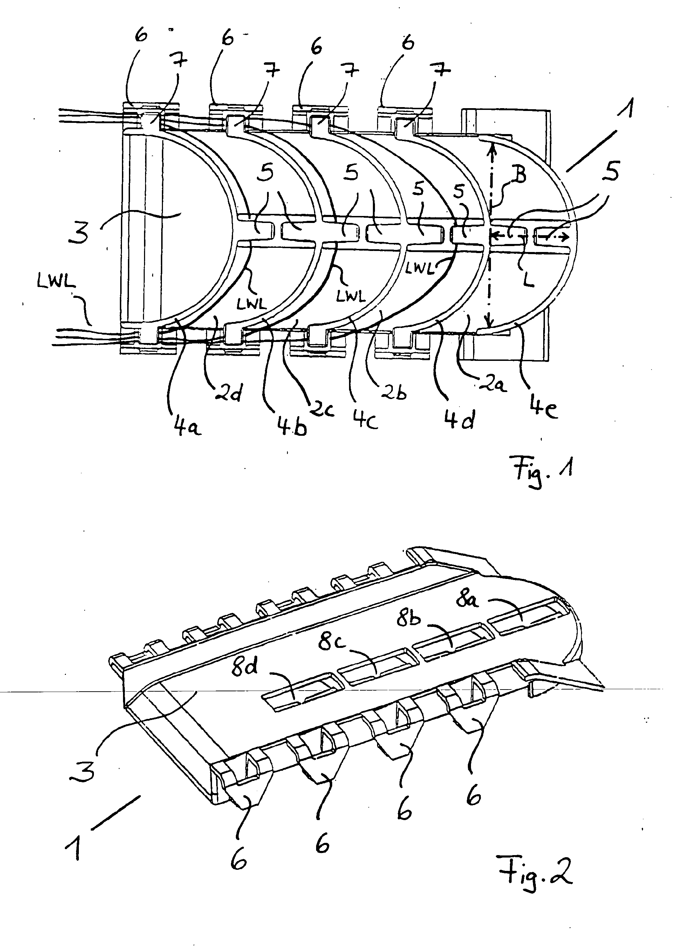

In Fig. 1 ist die Oberseite einer Kassette 1 dargestellt. Die Kassette 1 ist beispielsweise ein im Wesentlichen starres einstückiges Kunstoffteil. Die Kassette 1 weist einen Boden 3 (vgl. auch Fig. 2) auf. Auf dem Boden 3 sind fünf bogenförmige Stege 4a bis 4e aufgebracht. Durch den Boden 3 und die Stege 4a bis 4e werden vier Kammern 2a, 2b, 2c und 2c gebildet. In der Mitte der Stege sind Rastnasen 5 in Form von unterbrochenen Laschen zum Einklipsen und Halten von Lichtwellenleiter-Kabeln LWL ausgeformt. Jede Kammer 2a bis 2d weist zwei seitliche Öffnungen zu je einem Führungskanal auf. Die Führungskanäle sind ebenfalls Teil der Kassette 1. Jeder Führungskanal wird durch eine Reihe von Halterungen (6, 7) gebildet, die sich aus einem am Boden 3 befestigten Bügel 6 und einer am seitlichen Rand der Stege ausgeformten Lasche 7 zusammensetzen. Auch die Lasche 7 ist eine federnde Rastnase zum Einklipsen und Halten eines Lichtwellenleiter-Kabels LWL im Führungskanal.

Durch die Breite B der Kammern 2a bis 2d ist der Mindestbiegeradius vorgegeben. Durch die Länge L der Kammern ist das Ausmaß des Kabelspiels vorgegeben. In Fig. 1 ist beispielsweise in Kammer 2b im Unterschied zu den Kammern 2d und 2c der Ausgleich einer Überlänge eines Lichtwellenleiter-Kabels LWL veranschaulicht. Die bogenförmigen Stege sind zwar für eine reibungslose Kabelführung besonders vorteilhaft, jedoch kann der Verlauf der Stege auch eine andere Form annehmen.

Die Kassette 1 kann auf der Oberseite mit einer (hier nicht dargestellten) Abdeckung über den Rastnasen 5 und 7 verschlossen werden, um ein Ausfedeln der Lichtwellenleiter-Kabel zu verhindern und um die Querdruckbelastung zu vermindern. Eine derartige Abdeckung ist vozugsweise der Boden eines Kabelkanals. Die Kassette 1 wird in diesem Fall innerhalb des Kabelkanals mit der Oberseite nach unten am Boden des Kabelkanals eingeklipst, so daß die Unterseite der Kassette 1 (vgl. Fig. 2) als Führungs- und Trageschiene für weitere Kabel dienen kann.

In Fig. 2 ist die Unterseite des Bodens 3 der Kassette 1 gezeigt. Der Boden 3 weist vorzugsweise kleine Aussparungen in Form von Sichtfenstern 8a bis 8d für jede Kammer 2a bis 2d auf, um das Kammerinnere überprüfen zu können. Beispielsweise kann die Lage der eingelegten Lichtwellenleiter-Kabel LWL ebenso wie die Belegung der Kammern überprüft werden. Diese Sichtfenster 8a bis 8d sind insbesondere für den Fall sinnvoll, daß die Kassette 1 mit der nicht mehr sichtbaren Oberseite nach unten im Kabelkanal fixiert ist. Die Aussparungen in Form der Sichtfenster 8a bis 8d sollen möglichst klein ausgestaltet sein, um die Stabilität der Kassette 1 bzw. der Kammern und damit den Schutz vor Querdruck nicht unnötig zu reduzieren

Die erfindungsgemäße Aufnahmevorrichtung ist insbesondere für die Vernetzung von einer Mehrzahl von Steuergeräten mit Lichtwellenleiter- und weiteren Kabelbaumanschlüssen einsetzbar. Die Lichtwellenleiter und die weiteren Kabel können außerhalb der Kassette 1 zu einem Kabelbaum zusammengefaßt werden.

## Patentansprüche

1. Aufnahmevorrichtung zum Führen und Unlenken von mehreren Lichtwellenleitem mit mehreren den vorgegebenen Mindestbiegeradius begrenzenden Kammern, wobei die Kammern (2a,2b,2c,2d) derart ausgstaltet sind, daß durch die Breite (B) der Kammern der vorgegebene Mindestbiegeradius und durch die Länge (L) der Kammern ein vorgegebenes Längenausgleichesspeil erreicht werden, die Kammern (2a,2b,2c,2d) auf einer Kassette (1) angeordnet sind, die einen im Wesentlichen starren Boden (3) und darauf aufgebrachte Stege (4a,4b,4c,4d) aufweist wobei die Höhe der Stege mindestens dem Querschnitt der Lichwellenleiter-Kabels (LWL) entspricht, jede der Kammern (2a,2b,2c,2d) seitliche Öffnungen zu Führungskanälen aufweist und dass die Führungskanäle ebenfalls Teil der Kassette sind, die Führungskanäle federnde Rastnasen (7) zum Einklipsen eines Lichtwellenleiter-Kabels (LWL) aufweisen, die Stege (4a, 4b, 4c, 4d) federnde Rastnasen in Form von unterbrochenen Laschen (5) zum Einklipsen der Lichtwellenleiter-Kabel (LWL) in die Kammern (2a,2b,2c,2d) aufweisen, und die Rastnasen (5,7) ein Austreten der ansonsten frei beweglichen Lichtwellenleiter-Kabel (LWL) aus der Aufnahmevorrichtung verhindern.

2. Aufnahmevorrichtung nach Patentanspruch 1, **dadurch gekennzeichnet, daß** die federnden Rastnasen (7) der Führungskanäle im Bereich der seitlichen Öffnungen einer Kammer (2a; 2b; 2c; 2d) aus den Stegen (4a, 4b, 4c, 4d) herausgebildet sind.

3. Aufnahmevorrichtung nach einem der Patentansprüche 1 oder 2, **dadurch gekennzeichnet, daß** die Kassette (1) mit einer Abdeckung über den Rastnasen (5; 7) verschlossen wird.

4. Aufnahmevorrichtung nach Patentanspruch 3, **dadurch gekennzeichnet, daß** die Abdeckung Teil eines Kabelkanals ist, der auch die Kassette (1) aufnimmt.

5. Aufnahmevorrichtung nach Patentanspruch 4, **dadurch gekennzeichnet, daß** die Kassette (1) im Kabelkanal durch eine Einrastvorrichtung fixiert wird.

6. Aufnahmevorrichtung nach einem der Patentansprüche 1 bis 5, **dadurch gekennzeichnet, daß** der Boden (3) der Kassette (1) Aussparungen (8a bis 8d) in Form von Sichtfenstern aufweist.

## Claims

1. A receiving device for guiding and deflecting a plurality of optical waveguides with a plurality of chambers delimiting the predetermined minimum curvature radius, wherein the chambers (2a, 2b, 2c, 2d) are configured in such a way that the predetermined minimum curvature radius is achieved by the width (B) of the chambers and a predetermined length compensation play is achieved by the length (L) of the chambers, the chambers (2a, 2b, 2c, 2d) are arranged on a cassette (1), which has a substantially rigid base (3) and webs (4a, 4b, 4c, 4d) arranged thereon, wherein the height of the webs corresponds at least to the cross-section of the optical waveguide cables (LWL), each of the chambers (2a, 2b, 2c, 2d) has lateral openings to guide channels and the guide channels are also part of the cassette, the guide channels have resilient latching noses (7) for clipping in an optical waveguide cable (LWL), the webs (4a, 4b, 4c, 4d) have resilient latching noses (5) in the form of interrupted lugs for clipping in the optical wave guide cables (LWL) in the chambers (2a, 2b, 2c, 2d) and the latching noses (5, 7) prevent escape of the otherwise movable optical waveguide cables (LWL) from the receiving device.

2. A receiving device according to claim 1, **characterised in that** the resilient latching noses (7) of the guide channels in the region of the lateral openings of a chamber (2a; 2b; 2c; 2d) are formed from the webs (4a, 4b, 4c, 4d).

3. A receiving device according to either of claims 1 or 2, **characterised in that** the cassette (1) is closed with a cover over the latching noses (5; 7).

4. A receiving device according to claim 3, **characterised in that** the cover is part of a cable channel, which also receives the cassette (1).

5. A receiving device according to claim 4, **characterised in that** the cassette (1) is fixed in the cable channel by a latching device.

6. A receiving device according to any one of claims 1 to 5, **characterised in that** the base (3) of the cassette (1) has recesses (8a to 8d) in the form of viewing windows.

## Revendications

1. Dispositif de réception pour guider et dévier plusieurs fibres optiques, comprenant
plusieurs chambres délimitant le rayon de courbure minimal prédéterminé, les chambres (2a, 2b, 2c, 2d) étant configurées de sorte que leur largeur (B) permet d'obtenir le rayon de courbure minimal prédéterminé et leur longueur (L) d'obtenir un jeu prédéterminé de compensation de longueur,
les chambres (2a, 2b, 2c, 2d) étant disposées au niveau d'une cassette (1) qui présente un fond (3) pour l'essentiel rigide où sont appliquées des traverses (4a, 4b, 4c, 4d) dont la hauteur correspond au moins à la section transversale du câble de fibre optique (LWL),
chacune des chambres (2a, 2b, 2c, 2d) présentant des ouvertures latérales dans des canaux de guidage faisant également partie de la cassette, et présentant des becs (7) pour l'encliquetage d'un câble de fibre optique (LWL),
les traverses (4a, 4b, 4c, 4d) présentant des becs élastiques (5) alignés de façon interrompue pour l'encliquetage des câbles de fibre optique (LWL) dans les chambres (2a, 2b, 2c, 2d), et
les becs d'encliquetage (5, 7) empêchant une sortie du câble de fibre optique (LWL), pour le reste librement mobile, hors du dispositif de réception.

2. Dispositif de réception selon la revendication 1,
**caractérisé en ce que**
les becs d'encliquetage élastiques (7) des canaux de guidage, dans la zone des ouvertures latérales d'une chambre (2a ; 2b ; 2c ; 2d), sont configurés à partir des traverses (4a, 4b, 4c, 4d).

3. Dispositif de réception selon l'une des revendications 1 ou 2,
**caractérisé en ce que**
la cassette (1) est fermée par un couvercle par l'intermédiaire des becs d'encliquetage (5 ; 7).

4. Dispositif de réception selon la revendication 3,
**caractérisé en ce que**
le couvercle fait partie d'une gouttière de câbles, qui reçoit également la cassette (1).

5. Dispositif de réception selon la revendication 4,
**caractérisé en ce que**
la cassette (1) est fixée dans la gouttière de câbles par un dispositif d'encliquetage.

6. Dispositif de réception selon l'une des revendications 1 à 5,
**caractérisé en ce que**
le fond (3) de la cassette (1) présente des évidements (8a à 8d) sous forme de fenêtres de visualisation.
